# EUROPEAN PATENT SPECIFICATION

(11) **EP 0 770 649 B1**
(45) Date of publication and mention of the grant of the patent: **09.08.2000**
(21) Application number: 96903201.0
(22) Date of filing: 21.02.1996
(51) Int. Cl.: C09D 127/06, C09D 5/00

(54) **CHIPPING-RESISTANT COATING COMPOSITION BASED ON VINYL CHLORIDE PLASTISOL**
GEGEN STEINSCHLAG BESTÄNDIGE BESCHICHTUNGSZUSAMMENSETZUNG AUF VINYLCHLORIDBASIS
COMPOSITIONS DE REVETEMENT RESISTANT A L'ECAILLAGE, A BASE DE PLASTISOL DE CHLORURE DE VINYLE

(30) Priority: 21.02.1995 JP 3249095
(43) Date of publication of application: 02.05.1997
(73) Proprietor: Toyota Jidosha Kabushiki Kaisha, Toyota-shi, Aichi-ken 471-71 (JP)
(72) Inventor: NAKAJIMA, Mitsuo Toyota Jidosha Kabushiki Kaisha, Toyota-shi, Aichi-Ken 471-71 (JP); OHTA, Toshihisa Toyota Jidosha Kabushiki Kaisha, Toyota-shi, Aichi-Ken 471-71 (JP); HIRUMA, Sinji Cemedine Co., Ltd., Tokyo 141 (JP); NAKADA, Tomio Cemedine Co., Ltd., Tokyo 141 (JP)
(74) Representative: Fürniss, Peter, Dr.rer.nat.Dipl.Chem
(86) International application number: JP9600388
(87) International publication number: WO9626250

(56) References cited:
- DE-A- 3 113 692
- JP-A- 3 364 347
- JP-A- 4 076 069
- JP-A- 7 048 528
- JP-A- 62 260 867
- DATABASE WPI Section Ch, Week 9117 Derwent Publications Ltd., London, GB; Class A21, AN 91-123006 XP002064025 & JP 03 064 347 A (CEMEDINE CO., LTD.) , 19 March 1991
- CHEMICAL ABSTRACTS, vol. 87, no. 4, 25 July 1977 Columbus, Ohio, US; abstract no. 28644, XP002064024 & JP 51 097 680 A (DAI NIPPON TORYO CO., LTD.)

## Description

### Technical Field

The present invention relates to a vinyl chloride plastisol chip resistant coating material adapted to be applied to a vehicle body to protect it from chipping of gravel or the like from a road, and more particularly, to a chip resistant coating material containing a coating waste.

### Background Art

Conventionally, to protect a vehicle body from chipping of gravel or the like from a road during running of a vehicle, a vinyl chloride plastisol chip resistant coating material having an excellent shock resistance has been applied to an underfloor, side seal, gasoline tank, front apron and tire house of the vehicle.

The vinyl chloride plastisol chip resistant coating material is generally composed of a polyvinylchloride resin, a plasticizer, a filler, an adhesion giving agent, a diluent or the like. To reduce coating costs, an inorganic substance such as calcium carbonate, talc, mica, barium sulfate or magnesium carbonate is used as the filler. In addition, to reduce the weight of the coating material, a hollow filler may be added. To reduce coating costs, it is preferable to increase the amount of the inorganic filler. However, if the amount of the inorganic filler is in excess, the chip resistance of the coating material drops rapidly. Accordingly, in general, about 50 to 200 parts by weight of the inorganic filler has been added relative to 100 parts by weight of a polyvinylchloride resin.

### Disclosure of Invention

In a coating line for a vehicle or the like, a large amount of a coating residue has been collected from a water booth or the like and then discharged. This coating residue is a mixture of a coating material, a solvent and water. As shown in Japanese patent publication No. Sho 61-2424, in the coating line where the same coating material is always applied, the coating residue can be recycled as a coating material, after removing water therefrom. However, in the normal coating line where coating materials of various colors and various kinds have been applied, the coating residue is difficult to recycle by merely the removal of water therefrom. Therefore, the coating residue has been disposed by incineration or the like as industrial waste. The disposal of the coating residue, however, results in waste of resources. Accordingly, recycling of the coating residue, such as recovery of a solvent therein by distillation, has been investigated.

Japanese patent application laid-open No. Sho 55-8810, for example, discloses one method of forming a fine powder from a coating waste. Japanese patent application laid-open No. Sho 55-18450 discloses that the fine powder thus formed is mixed with a polyolefin resin to prepare a molding material. Japanese patent application laid-open No. Hei 4-76069 discloses a coating material containing the coating wase fine powder thus formed. And Japanese patent application laid-open No. Sho 53-99282 proposes to recycle a fine powder obtained by pulverizing, drying and solidifying a coating waste, as a filler for under coating.

The above-described recyclings of the coating waste in the form of a fine powder, however, have a problem that, since the amount of the coating waste discharged is much greater than the amount recycled, a considerable amount of the coating waste has been disposed by incineration or the like without recycling, to cause waste of resources.

To save resources, the present inventors have tried to displace one part of a filler with the coating waste fine powder. As a result, they have noted unexpectedly that, with the above-described displacement, the chip resistance has been improved remarkably.

Merely the addition of the coating waste fine powder as one part of the filler, however, has another problem of lowering of the thermal sagging resistance. This is considered to be caused by lowering of the thixotropy due to the addition of the coating waste fine powder.

The present invention has been made under the above-described circumstances, and has an object of providing a vinyl chloride plastisol chip resistant coating material capable of preventing lowering of the thermal sagging resistance in spite of the addition of a coating waste fine powder as a part of a filler to save resources.

The vinyl chloride plastisol chip resistant coating material of the present invention contains a calcium carbonate powder as one kind of a filler. The average particle diameter of the calcium carbonate powder ranges from 0.03 to 0.07 µm. The calcium carbonate powder is added in the ratio of 20 to 65 parts by weight of the calcium carbonate powder to 100 parts by weight of the filler. And a coating waste fine powder composed of a thermosetting coating is added as another kind of the filler in the ratio of 20 parts by weight or less of the coating waste fine powder to 100 parts by weight of the coating material.

The average particle diameter of the calcium carbonate powder means that of primary particles thereof.

With the chip resistant coating material of the present invention which contains a calcium carbonate powder having an average particle diameter of 0.03 to 0.07 µm in the ratio of 20 to 65 parts by weight of the calcium carbonate powder to 100 parts by weight of a filler thereof, lowering of the thermal sagging resistance can be effectively prevented while maintaining good work efficiency in spraying in spite of the addition of a predetermined amount of the coating waste fine powder as another kind of the filler.

In case of the conventional vinyl chloride plastisol chip resistant coating material, the average particle diameter of the calcium carbonate powder added as a filler ranges from 0.08 to 20 µm. In contrast, with the present invention, the average particle diameter of the calcium carbonate powder added as one kind of a filler ranges from 0.03 to 0.07 µm. By reducing the average particle diamter of the calcium carbonate powder, as compared to the conventional one, lowering of the thermal sagging resisance can be effectively prevented in spite of the addition of the coating waste fine powder as another kind of the filler. This is believed to be caused by the reduced particle diameter of the calcium carbonate powder enabling improvement of the thixotropy of a resulting coating material, and accordingly increasing the viscosity thereof. If the average particle diameter of the calcium carbonate powder is greater than 0.07 µm, the effect of preventing lowering of the thermal sagging resistance, which is resulted from improvement of the thixotropy, cannot be sufficiently achieved. If the average particle diameter of the calcium carbonate powder is smaller than 0.03 µm, the specific surface thereof increases, and flocculation of the calcium carbonate particles also increases, thereby making secondary and tertiary calcium carbonate particles difficult to break (blocking phenomena), and resulting in lowering of dispersion thereof. As a result, the effect of preventing lowering of the thermal sagging resistance, which is resulted from improvement of the thixotropy, cannot be sufficiently obtained and the work efficiency in spraying also decreases.

The composition ratio of the calcium carbonate powder to the total amount of the filler affects both the thixotropy and dispersion thereof. If the amount of the calcium carbonate powder is less than 20 parts by weight relative to 100 parts by weight of the total amount of the filler, the fluidity improving effect of the calcium carbonate powder decreases, which disables sufficient achievement of the effect of preventing lowering of the thermal sagging resistance, which is resulted from improvement of the thixotropy. If the amount of the calcium carbonate powder is greater than 65 parts by weight relative to 100 parts by weight of the total amount of the filler, the apparent viscosity increases excessively, which decreases the work efficiency in spraying and increases the specific gravity. Therefore, with the addition of the calcium carbonate powder in the ratio of 20 to 65 parts by weight of the calcium carbonate powder to 100 parts by weight of the total amount of the filler, lowering of the thermal sagging resistance can be effectively prevented while maintaining good work efficiency in spraying, in spite of the addition of a predetermined amount of the coatng waste fine powder as another kind of the filler.

With the chip resistant coating material of the present invention, the coating waste fine powder is added as another kind of the filler in the ratio of 20 parts by weight or less of the coating waste fine powder to 100 parts by weight of the total amount of the coating material. With the addition of the coating waste fine powder, the chip resistance can be improved. If the amount of the coating waste fine powder is greater than 20 parts by weight relative to 100 parts by weight of the total amount of the coating material, the thermal sagging resistance decreases. This is believed to be caused mainly by the fluidity improving (sagging preventing) effect being reduced due to decrease of the composition ratio of the calcium carbonate powder. If the amount of the coating waste fine powder is less than 5 parts by weight relative to 100 parts by weight of the total amount of the coating material, the effect of improving the chip resistance, which is achieved by the addition of the coating waste fine powder, cannot be sufficiently obtained. Accordingly, it is preferable to add the coating waste fine powder in the ratio of 5 parts by weight or more of the coating waste fine powder to 100 parts by weight of the coating material. The reason for this effect is not clear, but can be supposed to be the coating waste fine powder containing about 80 % of a resin, which decreases the substantial pigment concentration, thus improving the pliability of a resulting coating film.

Furthermore, the coating waste fine powder is small in specific gravity, as compared to the powders of calcium carbonate, talc or the like, which are normally added as a filler. More specifically, the specific gravity of the powders of calcium carbonate, talc or the like is about 2.0 to 4.0, whereas that of the coating waste fine powder is about 1.0 to 1.5. Therefore, by adding the coating waste fine powder as another kind of the filler, the weight of the chip resistant coating material of the present invention can be reduced.

### Best Mode for Carrying Out the Invention

Hereinafter, several embodiments of the present invention will be explained.

### (Preparation of a coating waste fine powder)

A coating residue remaining in a surfacer coating line for a vehicle body was collected, and crushed to about 2000 µm or less while heating by a Henchell mixer. A coating residue powder thus crushed is treated by a "pulverizer" made by Hosokawa micron, Co. Ltd., and classified to obtain a fine powder having a particle diameter of 100 µm or less. A coating material adapted to be used in the surface coating was a polyester melamine-based one packaged thermosetting coating material. The composition of a coating waste fine powder (TOM) obtained is shown in TABLE 1.

**TABLE 1**

| Appearance | brownish gray |
|---|---|
| Density (g/cm³) | 1.26 |
| Filling density (g/cm³) | 0.64 |
| Resin content (%) | 77.4 |
| Water content (%) | 0.4 |
| Viscosity (88 µm nopass%) | 3.3 % |

### (Preparation of chip resistant coating materials)

A polyvinylchloride resin, a plasticizer, a filler, an adhesion giving agent, a diluent, a non-slip agent, a hollow filler, a calcium carbonate powder described below and the above-described coating waste fine powder were mixed together in the composition ratio shown in TABLE 2 to obtain various vinyl chloride plastisol chip resistant coating mateials. The mixing was performed by a vacuum degassable universal stirrer. The above powders were mixed for 20 minutes and stirred while degassing for 15 minutes.

In TABLE 2, C.C. means calcium carbonate, TOM means a coating waste fine powder, TOM ratio means the composition ratio of the coating waste fine powder relative to 100 parts by weight of the coating material, and calcium carbonate ratio means the composition ratio of the calcium carbonate powder relative to 100 parts by weight of the total amount of the filler ( calcium carbonate powder, hollow filler and coating waste fine powder).
- Polyvinylchloride resin:: copolymer of vinyl chloride & vinyl acetate
(Polymerization degree: about 1700,
vinyl acetate content: about 7 %)
- Plasticizer:: diisononyl phthalate (DIND)
- Adhesion giving agent:: block isocyanate & polyamide resin
- Diluent:: hydrocarbon solvent
- Non-slip agent:: high viscosity polyester plasticizer
- Hollow filler:: glass balloon
(average particle diameter: 50 µ m)
- Calcium carbonate A:: average particle diameter of primary particle : 0.08 µm
- Calcium carbonate B:: average particle diameter of primary particle : 0.04 µm

### (Evaluation)

The viscosity and specific gravity of resulting coating materials were measured. The measured results were shown together in TABLE 2. The viscosity was measured by a BH type rotary viscosimeter rotor No. 7 with 20 rpm while maintaining the samples at 20 t , and the specific gravity was measured by a specific gravity cup method.

In addition, following properties of each coating material were evaluated.

### (Dumbbell physical properties)

Coating materials were respectively applied uniformly to a plate of which a surface is flat and smooth to enable the release of the coating materials therefrom, to a width of 30 mm and a thickness of 2 to 3 mm with an applicator. Then, they were dried by a hot air circulation drier at 130°C for 20 minutes, and left at 20 °C for 12 to 24 hours. Then, each plate thus coated was punched by a dumbbell No. 2 to obtain test pieces. Each test piece was subjected to a tensile test with 50 mm/sec to measure the elongation percentage (%) and tensile strength (MPa). The measured results were shown together in TABLE 2.

### (Chip resistance)

Coating materials were respectively applied to a cationic electrodeposition plate by an applicator to a dry film thickness of 1000 µm, dried at 130 °C for 20 minutes by a hot air circulation drier, and left at 20 °C for 12 to 24 hours. Then, nuts (JIS M-4.3 brass hexagonal nuts) were successively dropped vertically on each resulting coated film, and the total weight of nuts dropped until the surface of the cationic electrodeposition plate of each test piece appeared was measured. The measured results were also shown in TABLE 2.

### (Work efficiency in spraying)

Coating materials were respectively applied to a cationic electrodeposition plate by airless spraying using a pump for airless spraying (compression ratio = 45 : 1) and a hose of 3/8 inch and 5 m at 30 °C under a gun pressure of 100 kgf/cm² with a gun distance of 300 mm. And resulting pattern widths were measured. The measured results were also shown in TABLE 2. In TABLE 2, symbols ○ show that the pattern width was 200 mm or more, symbols △ show that the pattern width was 150 to 200 mm and symbols X show that the pattern width was 150 mm or less.

### (Thermal sagging resistance)

Coating materials were respectively applied to a cationic electrodeposition plate of 150 mm X 70 mm by an applicator with a semicircular bead of 10 ⌀ to a length of 100 mm to obtain test pieces. Each test piece was stood in a vertical position at 20 °C for 30 minutes and the resulting sagging distance was measured. The measured results were also shown in TABLE 2. In TABLE 2, symbols ○ show that the sagging distance was 0 to 5 mm or more, symbols △ show that the sagging distance was 5 to 10 mm, and symbols X show that the sagging distance was 10 mm or more.

### (Synthetic evaluation)

The synthetic judgements of the above-described various properties were also shown in TABLE 2. In TABLE 2, symbols ○ show that there was no problem, symbols △ show that the resulting coating materials had slight problems but were on the practical level, and symbols X show that there were problems to be overcome.

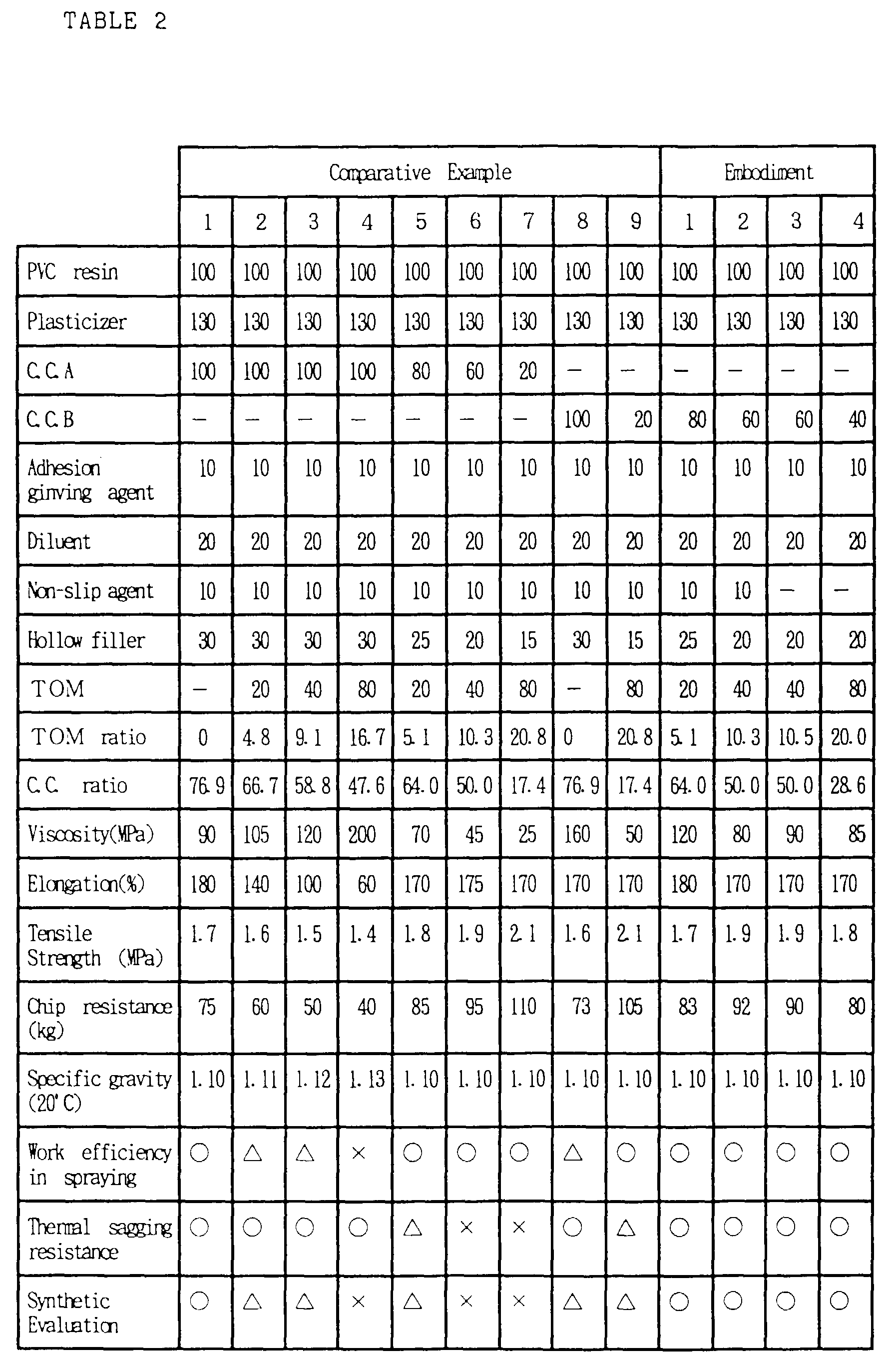

As apparent from TABLE 2, the coating materials Nos. 1 to 4 of the present invention, which respectively contain 20 to 65 parts by weight of a calcium carbonate powder B having an average particle diameter of 0.04 µm relative to 100 parts by weight of a filler, and 5 to 20 parts by weight of a coating waste fine powder relative to 100 parts by weight of each coating material, exhibited a good work efficiency in spraying and a good thermal sagging resistance.

In contrast, the coating materials Nos. 5 and 6 of the comparative examples, which respectively contain 20 to 65 parts by weight of a calcium carbonate powder A having an average particle diameter of 0.08 µm relative to 100 parts by weight of a filler, and 20 parts by weight or less of a coating waste fine powder relative to 100 parts by weight of each coating material, exhibited a decreased thermal sagging resistance. The coating materials Nos. 7 and 9 of the comparative examples, which respectively contain less than 20 parts by weight of a calcium carbonate powder relative to 100 parts by weight of the filler, and more than 20 parts by weight of a coating waste fine powder relative to 100 parts by weight of each coating material, exhibited a decreased thermal sagging resistance.

In addition, the coating materials Nos. 1 to 4 of the present invention had an improved chip resistance, as compared to the coating materials Nos. 1 and 8 of the comparative examples, which did not contain any coating waste fine powder.

The coating materials Nos. 3 and 4 of the present invention, which did not contain any non-slip agent, did not generate any slipping phenomenon when they were respectively applied to a cationic electrodeposition plate. This is believed to be caused by the coating waste fine powder having a proper viscosity and acting as a non-slip agent. Accordingly, the coating materials of the present invention do not require any expensive non-slip agent such as a polyester plasticizer, thus enabling reduction of coating costs.

As apparent from the evaluation results of the coating materials Nos. 1 to 4 of the comarative examples, when the amount of the calcium carbonate powder was not decreased properly with the gradual increase of the coating waste fine powder, the total amount of the filler became too great to increase the viscosity extremely. This results in both the work efficiency in spraying and chip resistance decreasing. Accordingly, the preferred maximum amount of the filler relative to 100 parts by weight of the coating material is 40 parts by weight.

By virtue of the addition of the coating waste fine powder, the specific gravity of the resulting coating material can be decreased, as compared to the cases where only the calcium carbonate powder is used. This results in the weight thereof being reduced. Conventionally, the weight of the coating material has been tried to be reduced by using a hollow filler. The hollow filler, however, is disadvantageous to improvement of the chip resistance, and is also expensive. In contrast, with the present invention, by using a coating waste fine powder in place of the hollow filler, the weight of the resulting coating material can be reduced, the chip resistance can be improved, and coating costs can be decreased.

The preferred composition of the coating material of the present invention is as follows:

| | |
|---|---|
| Polyvinylchloride resin | 23 to 27 % by weight |
| Plasticizer | 32 to 38 % by weight |
| Calcium carbonate | 6 to 25 % by weight |
| Adhesion giving agent | 1 to 4 % by weight |
| Diluent | 4 to 7 % by weight |
| Hollow filler | 3 to 8 % by weight |
| Coating waste fine powder | 5 to 20 % by weight |

The more preferred composition of the coating material of the present invention is as follows:

| | |
|---|---|
| Polyvinylchloride resin | 25 to 27 % by weight |
| Plasticizer | 32 to 35 % by weight |
| Calcium carbonate | 6 to 25 % by weight |
| Adhesion giving agent | 2 to 3 % by weight |
| Diluent | 5 to 6 % by weight |
| Hollow filler | 3 to 7 % by weight |
| Coating waste fine powder | 5 to 20 % by weight |

With the chip resistant coating material of the present invention, a large amount of the coating waste fine powder can be used and an improved chip resistance can be effected so that the effective use of the coating waste can be promoted, thus ensuring saving of resources. Furthermore, when the coating waste fine powder is added as one part of a filler to intend to save resources, good thermal sagging resistance and good work efficiency in spraying can be maintained. Since the coating waste fine powder has a low specific gravity, it can be substitued with one part of the conventional hollow filler, thus contributing to the reduction of coating costs. In addition, the coating material of the present invention, which is applied to a film thickness identical to that of the conventional coating material, can have a reduced weight, as compared to the conventional coating material, thus contributing to the reduction of fuel expenses of a motor vehicle. Furthermore, the coating material of the present invention, which has a chip resistance substantially identical to that of the conventional coating material, can have a reduced thickness. Thus, the reduced thickness along with the reduced specific gravity enables formation of a film having an extremely reduced weight.

## Claims

1. A vinyl chloride plastisol chip resistant coating material including a filler comprising
a) a calcium carbonate powder having an average particle diameter of 0.03 to 0.07 µm, which is present in the ratio of 20 to 65 parts by weight of said calcium carbonate powder to 100 parts by weight of the total amount of said filler; and
b) a coating waste fine powder composed of a thermosetting coating, which is present in the ratio of 20 parts by weight or less to 100 parts by weight of said coating material.

2. A vinyl chloride plastisol chip resistant coating material as claimed in claim 1, wherein said coating waste fine powder is added in the ratio of 5 parts by weight or more of said coating waste fine powder to 100 parts by weight of said coating material.

3. A vinyl chloride plastisol chip resistant coating material as claimed in claim 1, wherein said coating waste fine powder has a specific gravity of 1.0 to 1.5 and a particle diameter of 100 µm or less.

4. A vinyl chloride plastisol chip resistant coating material as claimed in claim 1, wherein said coating material includes 23 to 27 percent by weight of a polyvinylchloride resin, 32 to 38 percent by weight of a plasticizer, 6 to 25 percent by weight of said calcium carbonate powder, 1 to 4 percent by weight of an adhesion giving agent, 4 to 7 percent by weight of a diluent, 3 to 8 percent by weight of a hollow filler and 5 to 20 percent by weight of said coating waste fine powder.

5. A vinyl chloride plastisol chip resistant coating material as claimed in claim 1, wherein said coating material includes 25 to 27 percent by weight of a polyvinylchloride resin, 32 to 35 percent by weight of a plasticizer, 6 to 25 percent by weight of said calcium carbonate powder, 2 to 3 percent by weight of an adhesion giving agent, 5 to 6 percent by weight of a diluent, 3 to 7 percent by weight of a hollow filler and 5 to 20 percent by weight of said coating waste fine powder.

## Patentansprüche

1. Steinschlagbeständiges Vinylchloridplastisol-Beschichtungsmaterial, das einen Füllstoff einschließt, der
a) ein Calciumcarbonatpulver mit einem mittleren Teilchendurchmesser von 0,03 bis 0,07 µm, welches im Verhältnis von 20 bis 65 Gewichtsteilen des Calciumcarbonatpulvers zu 100 Gewichtsteilen der Gesamtmenge des Füllstoffes vorhanden ist; und
b) ein feines Beschichtungsabfallpulver, das aus einer duroplastischen Beschichtung besteht, welches im Verhältnis von 20 Gewichtsteilen oder weniger zu 100 Gewichtsteilen des Beschichtungsmaterials vorhanden ist,
umfaßt.

2. Steinschlagbeständiges Vinylchloridplastisol-Beschichtungsmaterial nach Anspruch 1, wobei das feine Beschichtungsabfallpulver im Verhältnis von 5 Gewichtsteilen oder mehr des feinen Beschichtungsabfallpulvers zu 100 Gewichtsteilen des Beschichtungsmaterials zugegeben ist.

3. Steinschlagbeständiges Vinylchloridplastisol-Beschichtungsmaterial nach Anspruch 1, wobei das feine Beschichtungsabfallpulver eine relative Dichte von 1,0 bis 1,5 und einen Teilchendurchmesser von 100 um oder weniger besitzt.

4. Steinschlagbeständiges Vinylchloridplastisol-Beschichtungsmaterial nach Anspruch 1, wobei das Beschichtungsmaterial 23 bis 27 Gew.-% eines Polyvinylchloridharzes, 32 bis 38 Gew.-% eines Weichmachers, 6 bis 25 Gew.-% des Calciumcarbonatpulvers, 1 bis 4 Gew.-% eines haftfähigkeitsverleihenden Mittels, 4 bis 7 Gew.-% eines Verdünnungsmittels, 3 bis 8 Gew.-% einer Hohlfaser und 5 bis 20 Gew.-% des feinen Beschichtungsabfallpulvers einschließt.

5. Steinschlagbeständiges Vinylchloridplastisol-Beschichtungsmaterial nach Anspruch 1, wobei das Beschichtungsmaterial 25 bis 27 Gew.-% eines Polyvinylchloridharzes, 32 bis 35 Gew.-% eines Weichmachers, 6 bis 25 Gew.-% des Calciumcarbonatpulvers, 2 bis 3 Gew.-% eines haftfähigkeitsverleihenden Mittels, 5 bis 6 Gew.-% eines Verdünnungsmittels, 3 bis 7 Gew.-% einer Hohlfaser und 5 bis 20 Gew.-% des feinen Beschichtungsabfallpulvers einschließt.

## Revendications

1. Matériau de revêtement résistant à l'écaillage à base de plastisol de chlorure de vinyle incluant une charge comprenant :
a) une poudre de carbonate de calcium présentant un diamètre de particules moyen de 0,03 à 0,07 µm, qui est présente dans la proportion de 20 à 65 parties en poids de ladite poudre de carbonate de calcium pour 100 parties en poids de la quantité totale de ladite charge ; et
b) une poudre fine de déchets de revêtement composée d'un revêtement thermodurcissable, qui est présente dans la proportion de 20 parties en poids ou moins pour 100 parties en poids dudit matériau de revêtement.

2. Matériau de revêtement résistant à l'écaillage à base de plastisol de chlorure de vinyle selon la revendication 1, dans lequel ladite poudre fine de déchets de revêtement est ajoutée dans la proportion de 5 parties en poids ou plus de ladite poudre fine de déchets de revêtement pour 100 parties en poids dudit matériau de revêtement.

3. Matériau de revêtement résistant à l'écaillage à base de plastisol de chlorure de vinyle selon la revendication 1, dans lequel ladite poudre fine de déchets de revêtement présente une densité de 1,0 à 1,5 et un diamètre de particules de 100 µm ou moins.

4. Matériau de revêtement résistant à l'écaillage à base de plastisol de chlorure de vinyle selon la revendication 1, dans lequel ledit matériau de revêtement inclut 23 à 27 pour cent en poids d'une résine de polychlorure de vinyle, 32 à 38 pour cent en poids d'un plastifiant, 6 à 25 pour cent en poids de ladite poudre de carbonate de calcium, 1 à 4 pour cent en poids d'un agent favorisant l'adhérence, 4 à 7 pour cent en poids d'un diluant, 3 à 8 pour cent en poids d'une charge creuse et 5 à 20 pour cent en poids de ladite poudre fine de déchets de revêtement.

5. Matériau de revêtement résistant à l'écaillage à base de plastisol de chlorure de vinyle selon la revendication 1, dans lequel ledit matériau de revêtement inclut 25 à 27 pour cent en poids d'une résine de polychlorure de vinyle, 32 à 35 pour cent en poids d'un plastifiant, 6 à 25 pour cent en poids de ladite poudre de carbonate de calcium, 2 à 3 pour cent en poids d'un agent favorisant l'adhérence, 5 à 6 pour cent en poids d'un diluant, 3 à 7 pour cent en poids d'une charge creuse et 5 à 20 pour cent en poids de ladite poudre fine de déchets de revêtement.
